# EUROPÄISCHE PATENTSCHRIFT

(11) **EP 1 387 973 B1**
(45) Veröffentlichungstag und Bekanntmachung des Hinweises auf die Patenterteilung: **16.02.2005**
(21) Anmeldenummer: 02727864.7
(22) Anmeldetag: 10.05.2002
(51) Int. Cl.: F16K 31/04

(54) **VENTILANTRIEB**
VALVE DRIVE
COMMANDE DE SOUPAPE

(30) Priorität: 15.05.2001 DE 10123706
(43) Veröffentlichungstag der Anmeldung: 11.02.2004
(73) Patentinhaber: Danfoss Trata D.O.O., 1210 Ljubljana Sentvid (SI)
(72) Erfinder: KOSEC, Vojko, 1000 Ljubljana (SI)
(74) Vertreter: Nissen, Georg
(86) Internationale Anmeldenummer: PCT/IB2002/001602
(87) Internationale Veröffentlichungsnummer: WO 2002/095276

(56) Entgegenhaltungen:
- EP-A- 0 380 787
- US-A- 5 090 239

## Beschreibung

Die Erfindung betrifft einen Ventilantrieb mit einem Gehäuse und einem Motor.

Ein derartiger Ventilantrieb, der aus EP 0 380 787 bekannt ist, wird dazu verwendet, den Öffnungsgrad eines Ventils zu steuern. Als Ventile kommen insbesondere Flüssigkeitsventile für die Flüssigkeitssteuerung von Luftbeheizungsanlagen in Betracht, wie sie zur Beheizung von Zelten, Hallen oder Sälen verwendet werden. Diese Ventile weisen normalerweise ein Schließelement auf, das mit einem Ventilsitz zusammenwirkt. Das Schließelement ist in vielen Fällen in Öffnungsrichtung mit einer Feder (oder einer anderen Kraft) vorgespannt. Der Ventilantrieb muß also lediglich zum Schließen des Ventils eine Kraft erzeugen. Das Öffnen des Ventils wird dadurch gesteuert, daß man die Spindel, mit der das Ventilelement verbunden ist, mehr oder weniger weit herauskommen läßt. Bei Ventilen, die in Schließrichtung vorgespannt sind, treten die nachfolgend geschilderten Probleme bei entgegengesetzten Betriebssituationen auf. Die Erfindung wird daher der Einfachheit halber anhand von in Öffnungsrichtung vorgespannten Ventilen beschrieben. Sie ist in entsprechender Weise auch bei in Schließrichtung vorgespannten Ventilen anwendbar.

Wenn das Ventil vollständig geöffnet ist, ist das Schließelement am weitesten entfernt von dem Ventilsitz. Eine weitere Bewegung ist nicht möglich. Wenn der Motor dennoch weiter arbeitet, besteht die Gefahr, daß der Motor oder ein anderes Teil des Ventilantriebs beschädigt wird. Auch wird die Regelverlustzeit größer, wenn der Motor über dem eigentlich notwendigen Antriebsweg arbeitet. Man muß den Motor daher so steuern, daß er den Antrieb unterbricht, wenn das Schließelement seine maximale Öffnungsposition erreicht hat. Dies läßt sich beispielsweise dadurch realisieren, daß man den Hubweg des Schließelements zuvor ermittelt und den Motor dann abschaltet, wenn der Hubweg zurückgelegt worden ist.

Diese Vorgehensweise hat jedoch den Nachteil, daß sich im Laufe der Zeit Fehler einschleichen können, so daß das Ventil nicht vollständig geöffnet wird oder der Motor trotz zurücklegen der Hublänge weiter arbeitet. Darüber hinaus ist es bei dieser Vorgehensweise problematisch, den Ventilantrieb bei einem etwas anderen Ventil zu verwenden, das beispielsweise eine andere Hublänge aufweist.

Der Erfindung liegt die Aufgabe zugrunde, einen Ventilantrieb an verschiedenen Ventile automatisch anzupassen.

Diese Aufgabe wird gelöst durch einen Ventilantrieb gemäß dem Anspruch 1.

Bei diesem Ventilantrieb überwacht man nicht den Hubweg der Ventilspindel. Man kontrolliert lediglich, ob eine Belastung auf die Betätigungsstange wirkt oder nicht. Man geht dabei davon aus, daß die Öffnungsfeder des Ventils eine Belastung der Betätigungsstange bewirkt, solange die Betätigungsstange auf die Ventilspindel drückt und zwar mit einer Kraft, die größer ist als ein vorbestimmter Schwellwert. Wenn sich nun das Schließelement des Ventils in seiner maximalen Öffnungsstellung befindet, dann kann es sich nicht mehr weiter bewegen. Wenn sich die Betätigungsstange des Ventilantriebs hingegen weiter in Öffnungsrichtung bewegt, dann hebt sie von der ventilspindel ab. Bei diesem Abheben, spätestens jedoch nach dem Abheben wird die Betätigungsstange durch die Ventilspindel nicht mehr belastet. Dieser Belastungsabfall wird vom Belastungssensor ermittelt, der dadurch erkennt, daß das Ventil seine maximale Öffnungsstellung eingenommen hat. Der Belastungssensor ist mit einer Steuereinrichtung gekoppelt, die aufgrund dieses Signals den Motor abschaltet. Das Abschalten kann dabei darauf beschränkt sein, daß der Motor in Öffnungsrichtung nicht mehr weiterdreht. Ein Antrieb in die entgegengesetzte Richtung wäre hingegen noch möglich. Das Belastungsende wird immer erkannt und zwar unabhängig von der Länge des Hubweges. Der Ventilantrieb kann daher praktisch ohne Änderungen bei unterschiedlichen Ventilen verwendet werden.

Der Belastungssensor weist einen Schalter auf, der durch eine Betätigungsanordnung betätigbar ist, die über eine Kupplung lösbar mit dem Antriebsteil verbunden ist, wobei der Schaltzustand der Kupplung von der axialen Position des Antriebsteils gegenüber dem Gehäuse abhängt. Man nutzt dabei die Tatsache aus, daß die Betätigungsstange bei einer Betätigung des Ventils nach unten aus dem Antriebsteil herausragt. Wenn nun die Betätigungsstange durch die Öffnungsfeder des Ventils belastet ist, dann wird die Betätigungsstange geringfügig angehoben und mit ihr der Antriebsteil. Dadurch wird die Kupplung ausgelöst, d.h. geöffnet. Die Betätigungsanordnung wird vom Antriebsteil gelöst. Wenn hingegen die Betätigungsstange weit genug in das Antriebsteil hineingeschoben worden ist, dann wird sie nicht mehr von der Ventilspindel abgestützt. Das Antriebsteil sinkt dann nach unten und die Kupplung wird geschlossen oder eingerückt, so daß die Betätigungsanordnung mit dem Antriebsteil mitgenommen wird. Durch diese Mitnahme kann diese den Schalter betätigen. Die Bezeichnungen "oben" und "unten" werden verwendet, um die Erläuterung zu vereinfachen. Es liegt auf der Hand, daß die bei einer entsprechenden Ausrichtung durch Schwerkraft hervorgerufenen Kräfte bei einer anderen Lage des Ventilantriebs im Raum auch durch Federkräfte oder andere Kräfte hervorgerufen werden können.

Vorzugsweise ist das Antriebsteil als Mutter ausgebildet, die auf ein Gewinde auf der Betätigungsstange aufgeschraubt ist. Diese Ausgestaltung hat mehrere Vorteile. Zum einen läßt sich mit Hilfe eines derartigen Gewindetriebes eine relativ große Übersetzung erzielen, so daß der Motor relativ schwach dimensioniert werden kann. Wichtig ist aber vor allem, daß die Betätigungsstange und die Mutter in Axialrichtung, d.h. in Bewegungsrichtung der Betätigungsstange, praktisch starr miteinander gekoppelt sind, so daß eine Bewegung der Betätigungsstange unmittelbar auf die Mutter übertragen wird, die damit wieder unmittelbar auf die Kupplung wirken kann.

In einer bevorzugten Ausgestaltung ist vorgesehen, daß die Kupplung einen gegenüber dem Antriebsteil verlagerbaren Ring mit einem Betätigungsaufsatz und einer Innenverzahnung aufweist, die in einer Betriebsstellung mit einer Außenverzahnung am Antriebsteil in Eingriff bringbar ist. Durch eine Verlagerung des Ringes gegenüber dem Antriebsteil läßt sich also die Kupplung ein- und ausrücken, wobei die Verlagerung abhängig ist von der Belastungssituation. Die Kupplung bildet also einen Teil des Belastungssensors. Die Ausbildung der Kupplung mit einer Innenverzahnung und einer Außenverzahnung stellt eine ausreichend stabile Eingriffsmöglichkeit dar, so daß man sicher sein kann, daß der Ring in eingerücktem Zustand gedreht wird, wenn das Antriebsteil gedreht wird, in ausgerücktem Zustand hingegen nicht.

Vorzugsweise ist der Ring in Radialrichtung verlagerbar und die Innenverzahnung ist auf einen vorbestimmten Umfangsabschnitt begrenzt. Wenn der Ring in Radialrichtung, also senkrecht zur Achse des Antriebsteils, bewegt wird, dann ist nur eine relativ kleine Bewegung notwendig, um die Innenverzahnung außer Eingriff mit der Außenverzahnung am Antriebsteil zu bringen. Die Verlagerungsbewegung kann sich also auf die Tiefe der beiden Verzahnungen beschränken. Wenn der Ring ausgerückt ist, dann kann die Außenverzahnung am Antriebsteil zwar mit der Innenwand des Ringes in Berührung stehen. Hier erfolgt aber allenfalls eine gewisse Reibung, die nicht ausreicht, um den Ring der Kupplung mitzunehmen.

Bevorzugterweise weist der Ring einen keilförmigen Nocken auf, der bei einer Drehung des Rings in eine entsprechend angepaßte keilförmige Nut im Gehäuse eingreift. Wenn also der Ring gedreht wird, kommt der keilförmige Nocken nach einem vorbestimmten Drehwinkel in Eingriff mit der keilförmigen Nut. Bei einer weiteren Drehbewegung des Ringes wird der Nocken durch die entsprechende Flanke der Nut regelrecht in Radialrichtung herausgezogen. Da der Nocken am Ring befestigt ist, folgt der Ring dem Nocken, so daß der Ring in Radialrichtung verlagert wird. Bei dieser Bewegung kommt die Innenverzahnung am Ring außer Eingriff mit der Außenverzahnung am Antriebsteil.

Vorzugsweise ist zwischen dem Gehäuse und dem Ring eine Rückstellfeder angeordnet, die den Ring in Richtung auf die Eingriffsposition belastet. Wenn nun der Ring wieder in die andere Richtung verdreht wird, erzeugt die Rückstellfeder die Rückstellkraft, die notwendig ist, um erneut einen Eingriff zwischen dem Ring und dem Antriebsteil zu bewirken. Diese Rückstellfeder kann relativ schwach ausgebildet sein. Es reicht aus, wenn sie eine relativ kleine Schlaglänge aufweist. Sie muß lediglich in der Lage sein, den Ring so weit zurückzuverlagern, daß ein Eingriff zwischen der Innenverzahnung am Ring und der Außenverzahnung am Antriebsteil wieder eingerichtet wird.

Bevorzugterweise ist zwischen dem Gehäuse und dem Ring eine durch Axialkraft zwischen dem Ring und dem Gehäuse betätigbare Rückstellverhinderungseinrichtung angeordnet. Solange die Betätigungsstange auf das Ventil wirkt, entsteht eine ausreichende Axialkraft, die den Ring in Axialrichtung gegen das Gehäuse drückt. Diese Kraft kann man nun ausnutzen, um eine Verlagerung des Rings relativ zum Gehäuse und damit relativ zum Antriebsteil zu verhindern. Damit ist die Verlagerungsbewegung abhängig von der Belastung des Antriebsteils.

Hierbei ist besonders bevorzugt, daß die Rückstellverhinderungseinrichtung durch jeweils eine Reibfläche am Ring und am Gehäuse gebildet ist. Der Reibschluß zwischen diesen beiden Flächen reicht aus, um ein Rückstellen zu verhindern. Voraussetzung dafür ist natürlich, daß die Rückstellfeder entsprechend angepaßt ist.

Bei einer alternativen Ausgestaltung weist die Kupplung einen spreizbaren Ring mit einem Betätigungsaufsatz auf, der mit einer Verzahnung am Antriebsteil im nicht gespreizten Zustand in Eingriff steht. Wenn der Ring gespreizt ist, also eine zumindest partielle Durchmesservergrößerung erfahren hat, dann kommt die Verzahnung am Antriebsteil und eine entsprechende Verzahnung am Ring außer Eingriff. Wenn sich das Antriebsteil, beispielsweise die Mutter, dreht, dann dreht sich der Ring nicht mit. Gegebenenfalls kann man dafür sorgen, daß der Ring im gespreizten Zustand durch eine kleinere oder größere Reibungskraft im Gehäuse festgehalten wird. Wird hingegen die Spreizung aufgehoben, dann kommen die Verzahnungen miteinander in Eingriff und der Ring dreht dann gemeinsam mit dem Antriebsteil. Der Betätigungsaufsatz steht etwas aus dem Ring hervor, so daß er in der Lage ist, einen Schalter zu betätigen. Der Betätigungsaufsatz kann einstückig mit dem Ring ausgebildet sein. Seine Länge und Größe hängt unter anderem davon ab, wo der Schalter positioniert ist und wie er ausgebildet ist.

Vorzugsweise weist der Ring ein Schlitz auf. Durch den Schlitz wird der Ring nachgiebiger, d.h. er läßt sich leichter aufweiten oder spreizen.

Bevorzugterweise weist der Ring eine Innenverzahnung auf, die sich über einen Teil seines Innenumfangs erstreckt. Eine derartige verkürzte Verzahnung reicht aus, um den Ring beim Schließen der Kupplung mitzunehmen und in Folge den Schalter zu betätigen. Eine im übrigen glatte Innenumfangswand des Ringes mindert das Risiko, daß eine versehentliche Fehlbetätigung des Ringes erfolgt.

Bevorzugterweise ist der Ring mit einer Ringfeder versehen. Man verläßt sich also nicht mehr auf die Eigenelastizität des Ringes, sondern unterstützt das Zusammenziehen des Ringes durch die Ringfeder.

Bevorzugterweise weist der Ring einen Innenkonus auf, der mit einer Spreizanordnung im Gehäuse zusammenwirkt. Dies ist eine relativ einfache Weise, um eine Axialbewegung des Ringes umzusetzen in den Spreizvorgang. Wenn der Ring mit seinem Innenkonus gegen die Spreizanordnung gedrückt wird, dann weitet der Ring sich auf, so daß seine Verzahnung mit der des Antriebsteils außer Eingriff kommt. Wenn hingegen der Innenkonus von der Spreizanordnung abgezogen wird, dann kann sich der Ring wieder zusammenziehen und kommt dementsprechend in Eingriff mit dem Antriebsteil.

Vorzugsweise weist die Spreizanordnung einen Außenkonus auf. Der Innenkonus und der Außenkonus wirken besonders gut und schonend zusammen, so daß auch eine lange Lebensdauer gewährleistet ist.

Vorzugsweise ist der Außenkonus an einer Rohr-Stirnseite angeordnet. Ein derartiges Rohr kann leicht im Gehäuse montiert werden. Es gestattet freien Zugriff auf die auf die Betätigungsstange aufgeschraubte Mutter.

Die Erfindung wird im folgenden anhand eines bevorzugten Ausführungsbeispiels in Verbindung mit der Zeichnung näher beschrieben. Hierin zeigen:
- Fig. 1: einen schematischen Querschnitt durch einen Ventilantrieb,
- Fig. 2: eine schematische Draufsicht auf eine Betätigungsanordnung,
- Fig. 3: eine Ansicht einer Kupplung in Explosionsdarstellung,
- Fig. 4: eine alternative Ausgestaltung einer Kupplung und
- Fig. 5: verschiedene Betriebsstellungen zur Erläuterung der Wirkungsweise der Ausgestaltung nach Fig. 4.

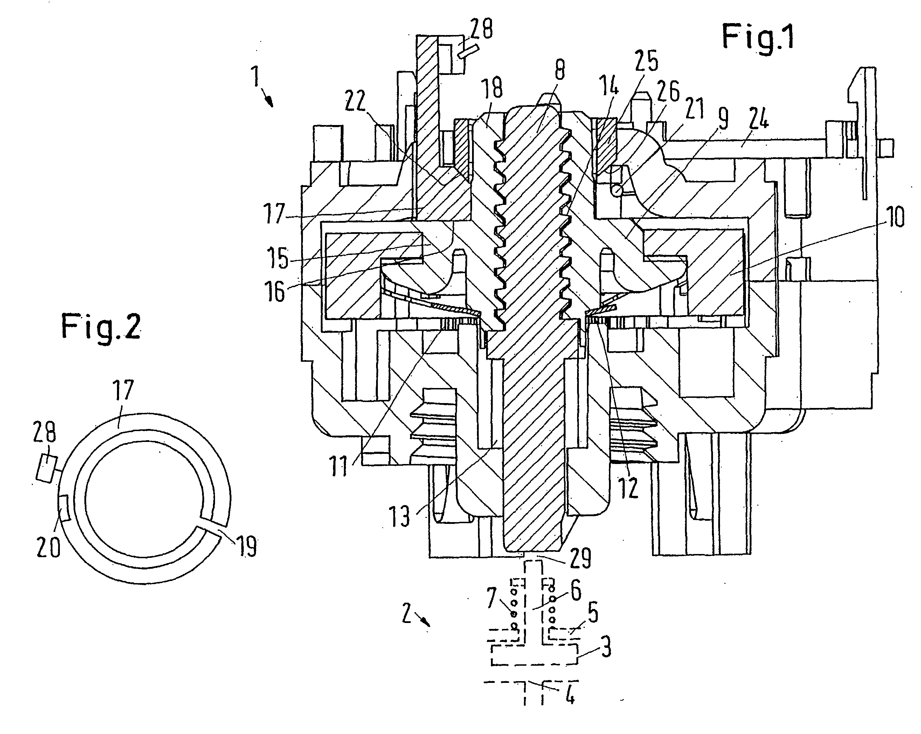

Ein Ventilantrieb 1 dient dazu, ein nur schematisch, gestrichelt dargestelltes Ventil 2 zu steuern, d.h. ein Schließelement 3 auf einen Ventilsitz 4 zuzubewegen und damit zu schließen, oder das Ventilelement 3 vom Ventilsitz 4 abzuheben und damit zu öffnen. Die Schließbewegung wird dadurch begrenzt, daß das Schließelement 3 am Ventilsitz 4 anliegt. Eine Öffnungsbewegung wird dadurch begrenzt, daß das Schließelement 3 an einem Gehäuse 5 oder an einem anderen Anschlag anliegt. In Fig. 1 ist die maximale Öffnungsstellung des Ventils 2 dargestellt.

Die Bewegung des Schließelements 3 wird gesteuert von einer Ventilspindel 6, die durch eine Feder 7 in Öffnungsrichtung vorbelastet ist. Die Feder 7 stützt sich am Gehäuse 5 ab.

Der Ventilantrieb 1 weist eine Betätigungsstange auf, die, bezogen auf die Darstellung der Fig. 1, nach oben und nach unten bewegbar ist. Wenn die Betätigungsstange 8 nach unten bewegt wird und in Anlage an die Ventilspindel 6 kommt, dann wird das Schließelement 3 bei weiterer Bewegung der Betätigungsstange 8 auf den Ventilsitz 4 zu bewegt. Wenn die Betätigungsstange 8 nach oben bewegt wird, dann folgt die Ventilspindel 6 der Betätigungsstange 8 so lange, bis das Schließelement 3 am Gehäuse 5 anliegt.

Die Betätigungsstange 8 wiederum wird angetrieben von einer Mutter 9, die über ein Zahnradgetriebe 10-12 von einem Motor 13 (teilweise durch die Betätigungsstange 8 verdeckt) angetrieben wird. Der Motor 13 versetzt die Mutter 9 in Drehbewegung. Die Betätigungsstange 8 ist drehfest gehalten, so daß sich die Drehbewegung der Mutter 9 über ein Gewinde 14 in eine translatorische Bewegung der Betätigungsstange 8 umsetzt.

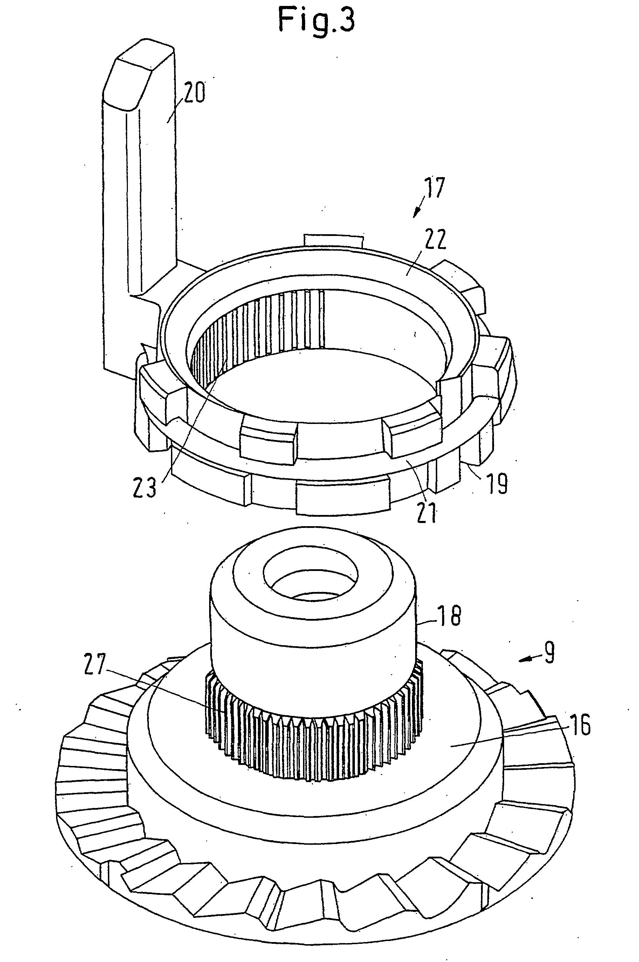

Die Mutter 9 weist eine Durchmesservergrößerung 15 auf, die eine Auflagefläche 16 bildet, auf der ein Ring 17 aufliegt. Der Ring 17 umgibt einen Abschnitt 18 der Mutter. Der Ring weist, wie dies aus Fig. 2 zu erkennen ist, einen Schlitz 19 und einen Betätigungsaufsatz 20 auf. Wie aus Fig. 3 zu erkennen ist, ist eine Ringfeder 21 vorgesehen, die den Ring 17 zusammendrückt. Ferner weist der Ring einen Innenkonus 22 auf. An seiner Innenwand weist der Ring eine Innenverzahnung 23 auf, die sich allerdings nur über einen Teil des Innenumfangs erstreckt.

Im Gehäuse 24 des Ventilantriebs ist ein Rohr 25 angeordnet, das einen Außenkonus 26 an seiner Stirnseite aufweist. Dieser Außenkonus 26 wirkt mit dem Innenkonus 22 des Rings 17 zusammen. Wenn der Ring 17 auf diesen Außenkonus 26 aufgeschoben wird, dann spreizt der Außenkonus 26 den Ring 17 gegen die Kraft der Ringfeder 21 auf. Wenn man hingegen den Ring 17 nicht gegen den Außenkonus 26 drückt, dann wird der Ring unter der Wirkung der Ringfeder 21 wieder zusammengezogen.

Die Mutter 9 weist an dem Abschnitt 18 oberhalb der Auflagefläche 16 eine Außenverzahnung 27 auf, die mit der Innenverzahnung 23 des Rings 17 in Eingriff kommt, wenn der Ring 17 nicht gespreizt ist. In diesem Fall wird der Ring 17 bei einer Drehung der Mutter 9 mitgenommen. Der Betätigungsaufsatz 20 kommt dann nach einer kleinen Umdrehung in Eingriff mit einem Schalter 28 und betätigt diesen. Der Schalter 28 ist mit einer nicht näher dargestellten Steuereinrichtung verbunden, die aufgrund der Betätigung des Schalters 28 den Motor 13 stillsetzt.

Der Ventilantrieb 1 arbeitet nun wie folgt:

Wenn das Ventil 2 geschlossen werden soll, wird die Mutter so gedreht, daß sich die Betätigungsstange 8 auf die Ventilspindel 6 zu bewegt und nach Erreichen derselben das Schließelement 3 auf dem Ventilsitz 4 zu bewegt. Eine Lücke 29 zwischen der Betätigungsstange 8 und der Ventilspindel 6 ist hier übertrieben groß dargestellt. Tatsächlich liegt die Betätigungsstange 8 praktisch unmittelbar an der Ventilspindel 6 an, auch wenn das Ventil 2 in seiner am weitesten geöffneten Position ist.

Solange die Betätigungsstange 8 auf die Ventilspindel 6 wirkt, wirkt auch die Kraft der Feder 7 auf die Betätigungsstange 8 zurück. Dadurch wird die Betätigungsstange 8 nach oben belastet und, da die Mutter 9 mit der Betätigungsstange 8 in Axialrichtung fest verbunden ist, wirkt diese Belastung auch über die Auflagefläche 16 auf den Ring 17. Der Ring 17 wird dadurch gegen den Außenkonus 26 des Rohres 25 gedrückt und aufgespreizt. Die Innenverzahnung 23 kommt dabei außer Eingriff mit der Außenverzahnung 27. Die Mutter 9 kann sich frei drehen, ohne daß der Ring 17 mitgenommen wird.

Bei einer Öffnungsbewegung des Schließelements 3 bleibt diese Belastung solange erhalten, bis das Schließelement 3 am Gehäuse 5 anliegt. Wenn die Betätigungsstange 8 noch über eine kleine Strecke weiter bewegt wird, dann läßt die Belastung durch die Feder 7 nach und die Betätigungsstange 8 und die Mutter 9 werden nicht mehr nach oben gedrückt. Der Ring 17 wird also nicht mehr durch den Außenkonus 26 aufgespreizt, sondern zieht sich zusammen, wodurch die beiden Verzahnungen 23, 27 in Eingriff miteinander kommen. Bei einer Weiterdrehung der Mutter 9 wird der Schalter 28 betätigt.

Der Motor 13 wird also immer dann gestoppt, wenn das Schließelement 3 seine maximale Öffnungsposition eingenommen hat, unabhängig davon, wie groß der Hubweg insgesamt ist. Es ist daher möglich, den Ventilantrieb bei verschiedenen Ventilen mit unterschiedlichen Hubwegen einzusetzen, ohne daß komplizierte Anpassungsmaßnahmen erforderlich sind.

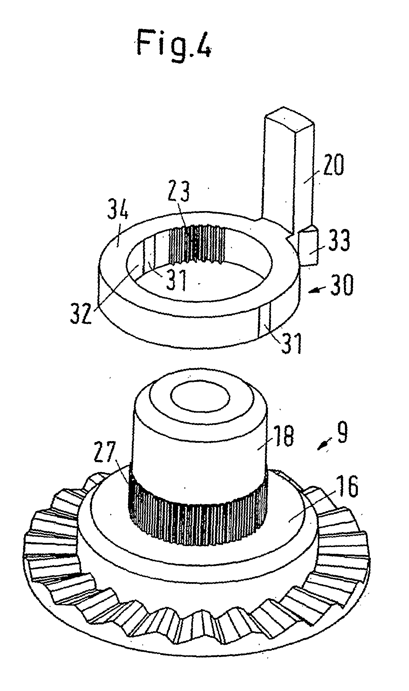

Fig. 4 zeigt eine abgewandelte Ausführungsform einer Kupplung, bei der gleiche Teile mit gleichen Bezugszeichen versehen sind wie bei der Gestaltung nach Fig. 3. Geändert hat sich hauptsächlich der Ring 30. Der Ring 30 weist nun keinen Schlitz mehr auf. Er ist vielmehr geschlossen ausgebildet. Er weist eine von der Kreisform abweichende Form auf. Genauer gesagt ist er länglich ausgebildet, was in Fig. 4 dadurch symbolisiert ist, daß er zwischen zwei Kreishälften Verlängerungsabschnitte 31 aufweist.

Die Innenverzahnung 23 ist auf einen vorbestimmten Umfangsabschnitt an der Innenseite 32 beschränkt. Der übrige Bereich der Innenseite 32 ist glatt.

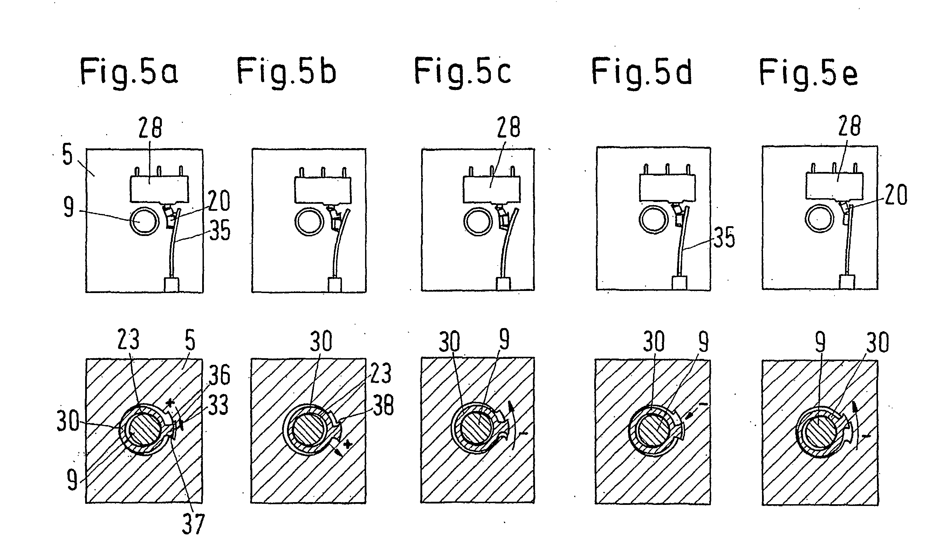

Am unteren Ende des Betätigungsaufsatzes 20 ist ein keilförmiger Nocken 33 vorgesehen, der im Zusammenhang mit Fig. 5 erläutert werden wird.

Der Innendurchmesser des Ringes 30 in Längsrichtung reicht aus, um bei einer entsprechenden Verlagerungsbewegung des Ringes 30 relativ zur Mutter 9, die im wesentlichen parallel zur Auflagefläche 16 erfolgt, die Innenverzahnung 23 außer Eingriff mit der Außenverzahnung 27 an der Mutter 9 kommen zu lassen. Der Innendurchmesser in der Richtung quer zur größten Längsausdehnung kann in etwa dem Außendurchmesser der Mutter 9 im Bereich der Außenverzahnung 27 entsprechen.

Der Ring 30 weist auf seiner axialen Oberseite eine Druckfläche 34 auf, die bei einer entsprechenden axialen Druckbeaufschlagung (im vorliegenden Fall von unten) an einer entsprechenden Gegenfläche (nicht näher dargestellt) im Gehäuse zur Anlage kommt. Die Druckfläche 34 und die Gegenfläche im Gehäuse bilden dann einen Reibschluß, zu dessen Überwindung eine vorbestimmte Kraft erforderlich ist.

Fig. 5 zeigt nun verschiedene Betriebsstellungen der Kupplung nach Fig. 4. Aus Gründen der Einfachheit ist die Mutter 9 als durchgehender Bolzen dargestellt. In Wirklichkeit hat sie natürlich eine Öffnung, durch die die Betätigungsstange 8 geschraubt werden kann.

Fig. 5a stellt eine Situation dar, in der der Ring 30 bei einer Drehung der Mutter 9 in Uhrzeigerrichtung mitgenommen wird. Dabei kommt der keilförmige Nocken 33 in Eingriff mit einer entsprechenden keilförmigen Nut 36 am Gehäuse 5, genauer gesagt mit einer keilförmigen Flanke 37 dieser Nut 36. Die keilförmige Flanke 37 wirkt mit einer entsprechenden Gegenflanke am keilförmigen Nocken 33 so zusammen, daß der Ring 30 radial etwas verlagert wird, wie dies in Fig. 5b dargestellt ist. Die Innenverzahnung 23 am Ring 30 kommt damit außer Eingriff mit der Außenverzahnung 27 an der Mutter 9. Diese Verlagerungsbewegung erfolgt gegen die Kraft einer Rückstellfeder 35, die allerdings relativ schwach ausgebildet ist.

In der in Fig. 5b dargestellten Position hat die Betätigungsstange 8 bereits Kontakt mit der Ventilspindel 6, so daß der Ring 30 nach oben an das Gehäuse 5 gedrückt wird. Die Druckfläche 34 liegt also an ihrer Gegenfläche an und zwar unter Reibschluß. Der Reibschluß ist so groß, daß er durch die Kraft der Rückstellfeder 35 nicht überwunden werden kann. Der Schalter 28 wird in dieser Situation nicht mehr betätigt.

Fig. 5c zeigt nun die Situation, wo die Mutter 9 in die entgegengesetzte Richtung gedreht wird. Der Ring 30 kann zwar etwas mitgenommen werden. Die Nut 36 weist aber eine Begrenzungsflanke 38 auf, die eine weitere Drehung des Ringes 30 verhindert. Der Schalter 28 wird also nach wie vor nicht betätigt.

Bei einer weiteren Drehung der Mutter 9 entgegen dem Uhrzeigersinn kommt die Betätigungsstange 8 von der Ventilspindel 6 frei, so daß der axiale Druck nachläßt, mit dem die Druckfläche 34 gegen die entsprechende Gegenfläche am Gehäuse 5 gedrückt wird. Sobald der Reibeingriff aufhört, ist die Rückstellfeder 35 in der Lage, den Ring 30 zurückzuverlagern, so daß die Innenverzahnung 23 in Eingriff mit der Außenverzahnung 27 an der Mutter 9 kommt. Bei einer weiteren Drehung der Mutter 9 wird, wie dies in Fig. 5e dargestellt ist, der Ring 30 mitgenommen, so daß der Betätigungsaufsatz 20 den Schalter 28 betätigen kann.

## Patentansprüche

1. Ventilantrieb mit einem Gehäuse (24), einem Motor (13), der über ein Antriebsteil (9) eines Spindeltriebs (14) auf eine Betätigungsstange (8) wirkt, und mit einem mit der Betätigungsstange (8) verbundenen Belastungssensor (17-20, 28), wobei der Belastungssensor (17-20, 28) einen Schalter (28) aufweist, der durch eine Betätigungsanordnung betätigbar ist, **dadurch gekennzeichnet, daß** die Betätigungsanordnung über eine Kupplung (23, 27) lösbar mit dem Antriebsteil (9) verbunden ist, wobei der Schaltzustand der Kupplung von der axialen Position des Antriebsteils (9) gegenüber dem Gehäuse (24) abhängt.

2. Ventilantrieb nach Anspruch 1, **dadurch gekennzeichnet, daß** das Antriebsteil als Mutter (9) ausgebildet ist, die auf ein Gewinde (14) auf der Betätigungsstange (8) aufgeschraubt ist.

3. Ventilantrieb nach Anspruch 1 oder 2, **dadurch gekennzeichnet, daß** die Kupplung einen gegenüber dem Antriebsteil (9) verlagerbaren Ring (30) mit einem Betätigungsaufsatz (20) und einer Innenverzahnung (23) aufweist, die in einer Betriebsstellung mit einer Außenverzahnung (27) am Antriebsteil (9) in Eingriff bringbar ist.

4. Ventilantrieb nach Anspruch 3, **dadurch gekennzeichnet, daß** der Ring (30) in Radialrichtung verlagerbar ist und die Innenverzahnung (23) auf einen vorbestimmten Umfangsabschnitt begrenzt ist.

5. Ventilantrieb nach Anspruch 3 oder 4, **dadurch gekennzeichnet, daß** der Ring (30) einen keilförmigen Nocken (33) aufweist, der bei einer Drehung des Rings (30) in eine entsprechend angepaßte keilförmige Nut (36) im Gehäuse (5) eingreift.

6. Ventilantrieb nach einem der Ansprüche 3 bis 5, **dadurch gekennzeichnet, daß** zwischen dem Gehäuse (5) und dem Ring (30) eine Rückstellfeder (35) angeordnet ist, die den Ring in Richtung auf die Eingriffsposition belastet.

7. Ventilantrieb nach einem der Ansprüche 3 bis 6, **dadurch gekennzeichnet, daß** zwischen dem Gehäuse (5) und dem Ring (30) eine durch Axialkraft zwischen dem Ring (30) und dem Gehäuse (5) betätigbare Rückstellverhinderungseinrichtung angeordnet ist.

8. Ventilantrieb nach Anspruch 7, **dadurch gekennzeichnet, daß** die Rückstellverhinderungseinrichtung durch jeweils eine Reibfläche (34) am Ring (30) und am Gehäuse (5) gebildet ist.

9. Ventilantrieb nach einem der Ansprüche 3 bis 8, **dadurch gekennzeichnet, daß** der Ring (30) eine längliche Innenöffnung aufweist.

10. Ventilantrieb nach Anspruch 1 oder 2, **dadurch gekennzeichnet, daß** die Kupplung einen spreizbaren Ring (17) mit einem Betätigungsaufsatz (20) aufweist, welcher Ring mit einer Verzahnung (27) am Antriebsteil im nicht gespreizten Zustand in Eingriff steht.

11. Ventilantrieb nach Anspruch 10, **dadurch gekennzeichnet, daß** der Ring (17) einen Schlitz (19) aufweist.

12. Ventilantrieb nach Anspruch 10 oder 11, **dadurch gekennzeichnet, daß** der Ring (17) eine Innenverzahnung (23) aufweist, die sich über einen Teil seines Innenumfangs erstreckt.

13. Ventilantrieb nach einem der Ansprüche 10 bis 12, daß der Ring (17) mit einer Ringfeder (21) versehen ist.

14. Ventilantrieb nach einem Ansprüche 10 bis 13, **dadurch gekennzeichnet, daß** der Ring (17) einen Innenkonus (22) aufweist, der mit einer Spreizanordnung (25) im Gehäuse zusammenwirkt.

15. Ventilantrieb nach Anspruch 14, **dadurch gekennzeichnet, daß** die Spreizanordnung (25) einen Außenkonus (18) aufweist.

16. Ventilantrieb nach Anspruch 15, **dadurch gekennzeichnet, daß** der Außenkonus (18) an einer Rohr-Stirnseite angeordnet ist.

## Claims

1. Valve actuator with a housing (24), a motor (13), acting via a propulsion unit (9) of a spindle drive (14) upon an actuation rod (8), and with a load sensor (17-20, 28) connected with the actuation rod (8), the load sensor (17-20, 28) having a switch (28), which can be activated by an actuation device, **characterised in that** the actuation device is detachable and connected via a coupling (23, 27) with the propulsion unit (9), the switching state of the coupling depending on the axial position of the propulsion unit (9) in relation to the housing (24).

2. Valve actuator according to claim 1, **characterised in that** the propulsion unit exists in the form of a nut (9), which is screwed onto a thread (14) on the actuation rod (8).

3. Valve actuator according to claim 1 or 2, **characterised in that** the coupling has a ring (30), which is displaceable in relation to the propulsion unit and provided with an actuation element (20), and an inner toothing (23), which can, in one operating position, be brought to engage with an outer toothing (27) on the propulsion unit (9).

4. Valve actuator according to claim 3, **characterised in that** the ring (30) is displaceable in the radial direction and the inner toothing (23) is limited to a predetermined circumferential section.

5. Valve actuator according to claim 3 or 4, **characterised in that** the ring (30) has a weddge-shaped boss (33), which engages in an correspondingly adapted wedge-shaped groove (36) in the housing (5) during a rotation of the ring (30).

6. Valve actuator according to one of the claims 3 to 5, **characterised in that** a resetting spring (35) is located between the housing (5) and the ring (30), said resetting spring (35) loading the ring in the direction of the engagement position.

7. Valve actuator according to one of the claims 3 to 6, **characterised in that** between the housing (5) and the ring (30) a resetting prevention device is located, said device being activated by axial force between the ring (30) and the housing (5).

8. Valve actuator according to claim 7, **characterised in that** the resetting prevention device is formed by friction surfaces (34) on the ring (30) and the housing (5), respectively.

9. Valve actuator according to one of the claims 3 to 8, **characterised in that** the ring (30) has a longish inner opening.

10. Valve actuator according to claim 1 or 2, **characterised in that** the coupling has an expandable ring (17) with an actuation element (20), said ring engaging with a toothing (27) on the propulsion unit in the non-expanded state.

11. Valve actuator according to claim 10, **characterised in that** the ring (17) has a slot (19).

12. Valve actuator according to claim 10 or 11, **characterised in that** the ring (17) has an inner toothing (23) which extends over a part of its inner circumference.

13. Valve actuator according to one of the claims 10 to 12, **characterised in that** the ring (17) is provided with an annular spring (21).

14. Valve actuator according to one of the claims 10 to 13, **characterised in that** the ring (17) has an inner cone (22), which interacts with an expansion device (25) in the housing.

15. Valve actuator according to claim 14, **characterised in that** the expansion device (25) has an outer cone (18).

16. Valve actuator according to claim 15, **characterised in that** the outer cone (18) is located on a pipe frontside.

## Revendications

1. Dispositif d'entraînement de soupape comportant un boîtier (24), un moteur (13), qui agit sur une tige d'actionnement (8) par l'intermédiaire d'une partie d'entraînement (9) d'un dispositif d'entraînement à broche (14), et comportant un détecteur de charge. (17-20, 28) relié à la tige d'actionnement (8), le détecteur de charge (17-20, 28) comportant un commutateur (28) qui peut être actionné par un dispositif d'actionnement, **caractérisé en ce que** le dispositif d'actionnement est relié de façon amovible à la partie d'entraînement (9) par l'intermédiaire d'un accouplement (23,27), l'état de commutation de de l'accouplement dépendant de la position axiale de la partie d'entraînement (9) par rapport au boîtier (24).

2. Dispositif d'entraînement de soupape selon la revendication 1, **caractérisé en ce que** la partie d'entraînement est agencée sous la forme d'un écrou (9), qui est vissé sur un filetage (14) situé sur la tige d'actionnement (8).

3. Dispositif d'entraînement de soupape selon la revendication 1 ou 2, **caractérisé en ce que** l'accouplement comporte une bague (30), qui peut être décalée par rapport à la partie d'entraînement (9) et comporte un capuchon d'actionnement (20) et une denture intérieure (23), qui, dans une position de fonctionnement, peut être amenée en prise avec une denture extérieure (27) sur la partie d'entraînement (9).

4. Dispositif d'entraînement de soupape selon la revendication 3, **caractérisé en ce que** la bague (30) peut être décalée dans une direction radiale et la denture intérieure (23) est limitée à une section périphérique prédéterminée.

5. Dispositif d'entraînement de soupape selon la revendication 3 ou 4, **caractérisé en ce que** la bague (30) possède une came cunéiforme (33) qui, lors d'une rotation de la bague (30), s'engage dans une gorge cunéiforme (36) adaptée de façon correspondante, dans le boîtier (5).

6. Dispositif d'entraînement de soupape selon l'une des revendications 3 à 5, **caractérisé en ce qu'**entre le boîtier (5) et la bague (30) est disposé un ressort de rappel (35), qui charge la bague en direction de la position d'engagement.

7. Dispositif d'entraînement de soupape selon l'une des revendications 3 à 6, **caractérisé en ce qu'**entre le boîtier (5) et la bague (30) est disposé un dispositif de blocage de rappel actionné par une force axiale entre la bague (30) et le boîtier (5).

8. Dispositif d'entraînement de soupape selon la revendication 7, **caractérisé en ce que** le dispositif de blocage de rappel est formé respectivement par une surface de friction (34) située sur la bague (30) et sur le boîtier (5).

9. Dispositif d'entraînement de soupape selon l'une des revendications 3 à 8, **caractérisé en ce que** la bague (30) possède une ouverture intérieure allongée.

10. Dispositif d'entraînement de soupape selon la revendication 1 ou 2, **caractérisé en ce que** l'accouplement possède une bague (17) pouvant être étendue et comportant un capuchon d'actionnement (20), laquelle bague engrène avec une denture (27) située sur la partie d'entraînement, lorsqu'elle est dans son état non étendu.

11. Dispositif d'entraînement de soupape selon la revendication 10, **caractérisé en ce que** la bague (17) possède une fente (19).

12. Dispositif d'entraînement de soupape selon la revendication 10 ou 11, **caractérisé en ce que** la bague (17) possède une denture intérieure (23) qui s'étend sur une partie de sa périphérie intérieure.

13. Dispositif d'entraînement de soupape selon l'une des revendications 10 à 12, **caractérisé en ce que** la bague (17) est pourvue d'un ressort annulaire (21).

14. Dispositif d'entraînement de soupape selon l'une des revendications 10 à 13, **caractérisé en ce que** la bague (17) possède un cône intérieur (22), qui coopère avec un dispositif d'écartement (25) situé dans le boîtier.

15. Dispositif d'entraînement de soupape selon la revendication 14, **caractérisé en ce que** le dispositif d'écartement (25) possède un cône extérieur (18).

16. Dispositif d'entraînement de soupape selon la revendication 15, **caractérisé en ce que** le cône extérieur (18) est disposé sur une face frontale d'un tube.
